# EUROPÄISCHE PATENTSCHRIFT

(11) **EP 1 448 418 B1**
(45) Veröffentlichungstag und Bekanntmachung des Hinweises auf die Patenterteilung: **14.10.2009**
(21) Anmeldenummer: 02802608.6
(22) Anmeldetag: 08.11.2002
(51) Int. Cl.: B60T 8/88, B60T 17/22, G01P 3/489

(54) **VERFAHREN UND VORRICHTUNG ZUR BEHANDLUNG VON FEHLERVERDACHT**
METHOD AND DEVICE FOR TREATING SUSPECTED ERRORS
PROCEDE ET DISPOSITIF DE TRAITEMENT D'ERREUR POTENTIELLE

(30) Priorität: 09.11.2001 DE 10155228
(43) Veröffentlichungstag der Anmeldung: 25.08.2004
(73) Patentinhaber: ROBERT BOSCH GMBH, 70442 Stuttgart (DE)
(72) Erfinder: BIERINGER, Mathias, 75428 Illingen (DE); LANDESFEIND, Klaus, 71522 Backnang (DE); ORTLINGHAUS, Dirk, 71642 Ludwigsburg (DE)
(86) Internationale Anmeldenummer: PCT/DE2002/004130
(87) Internationale Veröffentlichungsnummer: WO 2003/039929

(56) Entgegenhaltungen:
- EP-A- 0 584 566
- WO-A-02/058976
- DE-A- 4 106 704
- DE-A- 10 015 225
- DE-A- 10 064 503

## Beschreibung

### Stand der Technik

Die Erfindung geht aus von einem Verfahren und einer Vorrichtung zur Erzeugung eines Fehlersignals bei einem Kraftfahrzeug mit den Merkmalen der Oberbegriffe der unabhängigen Ansprüche.

In der DE 196 38 280 A1 ist die Erzeugung eines Fehlersignals bei einem Kraftfahrzeug mit wenigstens zwei rechts und links im hinteren und vorderen Bereich des Fahrzeugs angeordneten Rädern beschrieben. Hierzu werden Signale erfasst, die die Drehgeschwindigkeiten der Fahrzeugräder repräsentieren. Insbesondere abhängig von den erfassten Signalen wird weiterhin das Vorliegen einer Kurvenfahrt erfasst. Die während der Kurvenfahrt erfassten Signale werden dann erfindungsgemäß mit einem während einer Kurvenfahrt vorliegenden Sollverhalten verglichen, woraufhin abhängig von dem Vergleich das Fehlersignal erzeugt wird. Durch den Vergleich ist es möglich, fehlerhafte Drehzahlfühlersignale, beispielsweise durch eine Vertauschung der Leitungen, zu detektieren.

Aus der DE 196 36 443 A1 ist eine Vorrichtung und ein Verfahren zur Überwachung von Sensoren in einem Fahrzeug bekannt. Dabei dient die erfindungsgemäße Vorrichtung der Überwachung von Sensoren in einem Fahrzeug, welche Signale erzeugen, die jeweils unterschiedliche physikalische Größen repräsentieren. Die Vorrichtung enthält Mittel, mit denen für wenigstens zwei Sensoren, ausgehend von wenigstens den von ihnen erzeugten Signalen, für die Sensoren gleich definierte Vergleichsgrößen ermittelt werden. Ferner enthält die Vorrichtung weitere Mittel, mit denen in Abhängigkeit von wenigstens den ermittelten Vergleichsgrößen eine Referenzgröße ermittelt wird. Ausgehend von wenigstens der ermittelten Referenzgröße wird in Überwachungsmitteln wenigstens für einen Sensor eine Überwachung durchgeführt. Neben den Überwachungsmitteln enthält die Vorrichtung zusätzlich Mittel, mit denen wenigstens für einen Sensor eine Korrektur des von ihm erzeugten Signals, wenigstens in Abhängigkeit von der Referenzgröße, durchgeführt wird.

Die Merkmale der Oberbegriffe der unabhängigen Ansprüche gehen aus der DE 196 38 280 A1 hervor.

### Vorteile der Erfindung

Die Erfindung betrifft ein Verfahren und eine Vorrichtung zur Behandlung von Fehlerverdacht. Dabei basiert sie auf einem Verfahren zur Erzeugung eines Fehlersignals und darauf basierender Durchführung von Maßnahmen bei einem mit einem Radschlupfregelungssystem und/oder Radverzögerungsregelungssystem ausgestatteten Kraftfahrzeug, welches
- wenigstens eine Funktionsgröße, welche die Funktionalität des Radschlupfregelungssystems und/oder Radverzögerungsregelungssystems repräsentiert, auf einen Fehler hin überwacht und
- im Falle wenigstens eines detektierten Fehlers den Wert wenigstens eines Fehlerzählers inkrementiert und
- wenigstens ein Fehlersignal ausgibt, wenn der Wert wenigstens eines Fehlerzählers einen vorgebbaren Grenzwert überschreitet.

Der Kern der Erfindung besteht darin, dass
- für wenigstens einen Fehlerzähler gleichzeitig wenigstens zwei verschiedene vorgebbare Grenzwerte vorhanden sind, bei deren jeweiligem Überschreiten durch den Zählerstand des wenigstens einen Fehlerzählers unterschiedliche Fehlersignale ausgegeben werden und
- in Reaktion auf die unterschiedlichen Fehlersignale unterschiedliche Maßnahmen im Radschlupfregelungssystem und/oder Radverzögerungsregelungssystem durchgeführt werden.

Dadurch werden im Falle eines Fehlerverdachts abgestufte Maßnahmen erlaubt. Im folgenden wird aus Gründen der übersichtlicheren Darstellung häufig der Begriff "Radschlupfregelungssystem" verwendet. Damit sei aber stets ein Radschlupfregelungssystem und/oder Radverzögerungsregelungssystem gemeint.

Zur Veranschaulichung stelle man sich vor, dass eine Überwachungsvorrichtung in einem Radschlupfregelungssystem eines Kraftfahrzeug einen möglichen Fehler detektiert. Jedoch ist zugleich die Wahrscheinlichkeit dafür, dass tatsächlich ein Fehler vorliegt, nicht so groß, dass tatsächlich drastische Gegenmaßnahmen wie beispielsweise das automatische Abschalten des Radschlupfregelungssystems gerechtfertigt wären. Die Erfindung erlaubt es in diesem Fall, abgestufte Gegenmaßnahmen durchzuführen. Beispielsweise können bei einer einmaligen Detektion des Fehlers durch das Radschlupfregelungssystem beeinflußte Druckaufbau- oder Druckabbauprozesse verlangsamt werden. Erst bei einer erneuten oder mehrfachen Detektion des Fehlers werden drastischere Gegenmaßnahmen ergriffen. Anstelle von Druckaufbau- und Druckabbauprozessen können natürlich auch allgemein Bremskraftaufbau- und Bremskraftabbauprozesse verlangsamt werden. Hierbei ist beispielsweise an die elektromechanische Bremse (EMB) gedacht, bei welcher der Bremskraftaufbau und Bremskraftabbau nicht mehr hydraulisch gesteuert wird. Deshalb ist die Erfindung ohne weiteres auch auf Fahrzeuge anwendbar, welche mit einer elektromechanischen Bremsanlage ausgestattet sind.

Ein vorteilhafter Einsatzbereich der Erfindung ist dann gegeben, wenn es sich bei dem Radschlupfregelungssystem um ein Fahrdynamikregelungssystem handelt, welches wenigstens eine die Fahrdynamik repräsentierende Größe auf ein gewünschtes Verhalten regelt.

Von Vorteil ist weiterhin, wenn die Überwachung wenigstens einer Funktionsgröße, welche die Funktionalität des Radschlupfregelungssystems repräsentiert, dadurch erfolgt, dass eine Überprüfung des Erfülltseins wenigstens einer gegebenen Bedingung stattfindet.

Wie bereits erwähnt wird vorteilhafterweise als erste Maßnahme bei Überschreiten des niedrigsten Grenzwerts durch einen Fehlerzähler eine Verlangsamung der Druckaufbaudynamik in den Radbremsen durchgeführt.

Dies lässt sich dahingehend verallgemeinern (z.B. bei der elektromagnetischen Bremse), dass als erste Maßnahme bei Überschreiten des niedrigsten Grenzwerts durch einen Fehlerzähler eine Verlangsamung der Bremskraftaufbauprozesse und Bremskraftabbauprozesse in den Radbremsen durchgeführt wird.

Als zweite Maßnahme bietet es sich beispielsweise an, bei Überschreiten des zweitniedrigsten Grenzwerts durch einen Fehlerzähler entweder die Eingriffsschwelle für wenigstens einen Bremseneingriff des Fahrdynamikregelungssystems zu erhöhen und/oder wenigstens einen Eingriff des Fahrdynamikregelungssystems ganz zu untersagen.

Dies bedeutet in anderen Worten, dass es sich als zweite Maßnahme beispielsweise anbietet, dass bei Überschreiten des zweitniedrigsten Grenzwerts durch einen Fehlerzähler eine größere Abweichung wenigstens einer die Fahrdynamik repräsentierenden Größe von ihrem gewünschten Verhalten zulässig ist, bevor ein Regelungseingriff des Fahrdynamikregelungssystems erfolgt und/oder dass als zweite Maßnahme wenigstens ein Regelungseingriff des Fahrdynamikregelungssystems ganz untersagt wird. Die Untersagung eines Regelungseingriffs durch ein Fahrdynamikregelungssystem kann dabei bedeuten, dass wenigstens eine Eingriffsart, beispielsweise ein Eingriff gegen Übersteuern oder ein Eingriff gegen Untersteuern oder ein Eingriff an einem ausgewählten Rad, ganz untersagt wird.

Eine weitere Überwachungsmaßnahme kann folgendermassen aussehen: Die Überwachung wenigstens einer Funktionsgröße erfolgt dadurch, dass eine durch das Ausgangssignal eines Fahrzeugsensors repräsentierte Größe mit einer durch ein mathematisches Modell berechneten Größe verglichen wird.

Vorteilhaft ist es hierbei, wenn der Vergleich einer durch das Ausgangssignal eines Fahrzeugsensors repräsentierten Größe mit einer durch ein mathematisches Modell berechneten Größe nur während bestimmter Fahrzustände erfolgt. Dies hängt mit dem Gültigkeitsbereich des mathematischen Modells zusammen. Befindet sich das Fahrzeug in einem Fahrzustand, in welchem keine Gültigkeit des mathematischen Modells vorliegt, dann hat natürlich auch die durch das mathematische Modell berechnete Größe keine wesentliche Aussagekraft mehr.

Vorteilhafterweise wird unter einer Funktionsgröße die Spannung an einem Punkt der elektronischen Schaltung des Radschlupfregelungssystems und/oder Radverzögerungsregelungssystems verstanden. Darunter kann aber auch das Ausgangssignal eines Sensors oder eine aus einem mathematischen Modell berechnete Größe verstanden werden.

Weitere vorteilhafte Ausgestaltungen der Erfindung sind den Unteransprüchen zu entnehmen.

### Zeichnung

Ein Ausführungsbeispiel der Erfindung ist in der folgenden Zeichnung dargestellt und erläutert. Die Zeichnung besteht aus den Figuren 1 bis 4.
Fig. 1 zeigt den prinzipiellen Ablauf der Verfahrens zur Behandlung von Fehlerverdacht.
Fig. 2 zeigt ein einfaches Sicherheitskonzept für ein Radschlupfregelungssystem, bei welchem bei einem erkannten Fehler das Radschlupfregelungssystem abgeschaltet wird
Fig. 3 zeigt ein erstes Sicherheitskonzept für ein Radschlupfregelungssystem, bei welchem vor der Fehlererkennung bereits auf Fehlerverdacht erkannt wird und als Reaktion darauf die Druckaufbaudynamik in den Radbremsen bei durch das Radschlupfregelungssystem hervorgerufenen Bremseingiffen verlangsamt wird.
Fig. 4 zeigt ein zweites Sicherheitskonzept für ein Radschlupfregelungssystem, bei welchem vor der Fehlererkennung bereits auf Fehlerverdacht erkannt wird und als Reaktion darauf die Eingriffsschwellen des Fahrdynamikregelungssystems aufgeweitet werden.

### Ausführungsbeispiele

Zuerst sollen einige mögliche Überwachungsmaßnahmen an einem Radschlupfregelungssystem dargestellt werden:
1. Hardware-Überwachung: Hier ist beispielsweise die Überwachung des Spannungswertes an einem Punkt der elektronischen Schaltung denkbar.
2. Sensorüberwachung: Da ein Radschlupfregelungssystem auch Sensoren umfasst (zum Beispiel Raddrehzahlsensoren, Querbeschleunigungssensor, Lenkwinkelsensor, Gierratensensor, Drucksensoren,...) ist eine Überwachung der Sensoren denkbar. Beispielsweise kann das von einem Sensor gelieferte Ausgangssignal dahingehend überwacht werden, ob der Wert dieses Signales bzw. der durch dieses Signal repräsentierten Größe in einem physikalisch sinnvollen oder möglichen Bereich liegt. Auch eine Überwachung der zeitlichen Änderung einer durch ein Sensorsignal repräsentierten Größe ist denkbar.
3. Modellgestützte Überwachung: Manche Größen stehen in zweifacher Weise zur Verfügung. Zum einen werden sie durch einen Sensor erfasst, zum anderen werden sie aus einem mathematischen Modell ermittelt. Hier bietet sich ein Vergleich der aus dem Sensorsignal gewonnenen Größe mit der aus einem mathematischen Modell ermittelten Größe an. Dabei ist natürlich der Gültigkeitsbereich des mathematischen Modells zu beachten, d.h. ein Vergleich während eines Fahrzustandes, in dem das mathematische Modell nicht gültig ist, hat nur eine begrenzte Aussagekraft.

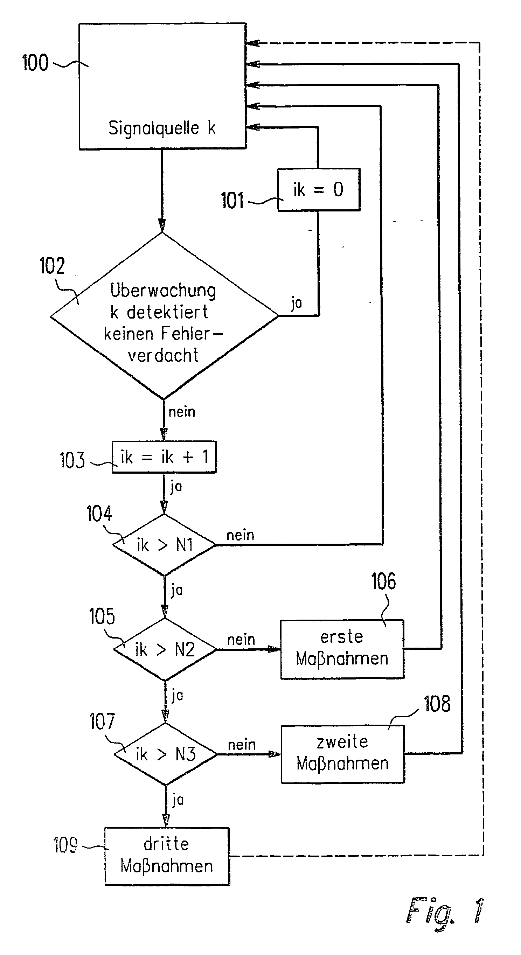

Verschiedenen prinzipiell möglichen Fehlern werden separate Fehlerzähler zugeordnet. Der prinzipielle Arbeitsablauf bezüglich des Fehlerzählers k, welcher eine Überwachung k durchführt, ist in Fig. 1 dargestellt. Neben dem Fehlerzähler k gibt es weitere Fehlerzahler 1, 2, 3,..., k-1, k+1, ..., N, welche die Überwachungen 1, 2,..., k-1, k+1,..., N durchführen. Insgesamt seien N Fehlerzähler vorgesehen.

Block 100 stellt eine Signalquelle k dar, welche ein oder mehrere Ausgangssignale zur Überwachung an Block 102 liefert. Bei dieser Signalquelle kann es sich beispielsweise um einen Sensor handeln, oder um die Spannung an einem speziellen Punkt in der elektronischen Schaltung des Radschlupfregelungssystems oder um das Ausgangssignal eines mathematischen Modells. Die von dieser Signalquelle k gelieferte Ausgangsgröße bzw. die gelieferten Ausgangsgrößen werden in Block 102 überwacht. Dazu gibt es eine Überwachungsabfrage k. Durch diese Überwachungsabfrage kann beispielsweise überprüft werden, ob die von der Signalquelle k gelieferte Ausgangsgröße größer als ein vorgebbarer Grenzwert ist. Es sind aber auch kompliziertere Abfragen denkbar. So kann überprüft werden, ob die von der Signalquelle k gelieferte Ausgangsgröße größer als ein erster vorgebbarer Grenzwert (=Minimalwert) und zugleich kleiner als ein zweiter vorgebbarer Grenzwert (=Maximalwert) ist.
Es ist auch denkbar, dass die Signalquelle k mehrere Ausgangssignale liefert, beispielsweise die Ausgangsspannung an einer Anschlußklemme des Radschlupfregelungssystems sowie die Temperatur an einem bestimmten Punkt des Radschlupfregelungssystems. Damit sind auch kombinierte Überwachungsabfragen denkbar. Eine solche Überwachungsabfrage könnte beispielsweise in der Überprüfung bestehen, ob die Temperatur einen bestimmten, vorgebbaren Wert unterschreitet und zugleich eine Spannung einen anderen, vorgebbaren Wert überschreitet.
Eine weitere kombinierte Überwachungsabfrage könnte aus einem Vergleich zwischen der aus einem Sensorsignal gewonnenen Größe und der aus einem mathematischen Modell ermittelten Größe bestehen.
Im Rahmen eines Flussablaufplans kann Block 100 auch als Einlesen von Daten gedeutet werden. Die Art dieser Daten wurde im vorigen Absatz dargestellt.

Zeigt die Überwachungsabfrage 102, dass das von der Signalquelle 100 gelieferte Signal alle Bedingungen erfüllt, d.h. plausibel ist, dann wird in Block 101 der Fehlerzähler ik auf Null zurückgesetzt. Der Fehlerzähler ik enthält die Zahl der in nichtunterbrochener Folge ermittelten Nichterfüllungen der Überwachungsabfrage k. Danach werden erneut die Ausgangssignale der Signalquelle 100 überwacht, d.h. es wird wenigstens eine Größe eingelesen.

Zeigt die Überwachungsabfrage 102 jedoch, dass das Ausgangssignal (bzw. die Ausgangssignale) von Block 100 nicht alle geforderten Bedingungen erfüllt, dann ist dies ein Hinweis auf einen möglichen Fehler. Deshalb wird in Block 103 der Wert ik des Fehlerzähler um Eins erhöht. In Block 104 findet eine Abfrage statt, ob ik > N1 ist. N1 ist dabei ein vorgebbarer Grenzwert. Ist diese Bedingung nicht erfüllt, dann wird zu Block 100 zurückverzweigt. Ist diese Bedingung erfüllt, dann folgt die nächste Überprüfung von ik in Block 105: ik > N2.
N2 ist dabei größer als N1.
Wenn die Bedingung in Block 105 nicht erfüllt ist, dann bedeutet dies, daß ik größer als N1, aber kleiner als N2 ist. Deshalb werden in Block 106 nun erste Maßnahmen eingeleitet. Diese ersten Maßnahmen können beispielsweise in einer Verlangsamung der Druckaufbaudynamik bzw. Druckabbaudynamik des Radschlupfregelungssystems bestehen. Anstelle von Druckaufbau und Druckabbau kann es sich auch um Kraftaufbau und Kraftabbau handeln, wie es bei der elektromechanischen Bremse der Fall ist.

Dieser Sachverhalt soll nochmals kurz und anschaulich erläutert werden:
- Durch ik > N1 wurde erkannt, daß möglicherweise ein Fehler im Radschlupfregelungssystem vorliegt.
- Dadurch aber, dass ik noch kleiner als N2 ist, liegt noch keine hinreichende Sicherheit dafür vor, dass wirklich ein Fehler vorhanden ist.
- Deshalb werden beispielsweise die beschriebenen ersten Maßnahmen eingeleitet.
- Der Sinn der ersten Maßnahmen besteht im Beispiel darin, dass das Radschlupfregelungssystem weiterhin alle notwendigen Eingriffe durchführt, allerdings zeitlich etwas langsamer. Dadurch wird Zeit für eine weitere Überprüfung des Fehlerverdachts gewonnen.

Ist in Block 105 dagegen ik > N2, dann folgt anschließend eine weitere Abfrage ik > N3 in Block 107. Dabei gilt N3 > N2.
Ist ik nicht größer als N3, werden in Block 108 zweite Maßnahmen eingeleitet, welche vorteilhafterweise bereits etwas stärkere Auswirkungen auf das Radschlupfregelungssystem haben. Am Beispiel eines Fahrdynamikregelungssystems (ESP, FDR) kann das bedeuten, dass die Eingriffsschwellen mancher Regelungseingriffe erhöht werden oder dass sogar manche Eingriffe ganz verboten werden.

Wird in Block 107 festgestellt, dass ik > N3 ist, dann werden in Block 109 dritte Maßnahmen eingeleitet. Diese dritten Maßnahmen können beispielsweise darin bestehen, dass relevante Funktionen des Radschlupfregelungssystems abgeschaltet werden oder dass sogar das ganze Radschlupfregelungssystem abgeschaltet wird. Falls ik > N3 ist, liegt mit großer Wahrscheinlichkeit ein Fehler im Radschlupfregelungssystem bzw. in einer Komponente vor. Durch eine strichlierte Linie ist Block 109 mit Block 100 verbunden. Dies hängt damit zusammen, dass möglicherweise ein erneuter Überwachungszyklus in Block 100 beginnt. Es ist aber auch möglich, bei einem komplett abgeschalteten Radschlupfregelungssystem auf weitere Überwachungen zu verzichten.

Wie bereits erwähnt gibt es separate Fehlerzähler für separate Fehler. Das in Fig. 1 dargestellte Verfahren ist sinngemäß auch auf die anderen Fehlerzähler übertragbar.
In einer speziellen Ausführungsform ist es möglich, dass die durchgeführten ersten Maßnahmen bei Erreichen der entsprechenden Grenzwerte durch verschiedene Fehlerzähler jeweils identisch sind. Dasselbe gilt auch für die zweiten und dritten Maßnahmen.
Es ist aber auch denkbar, abhängig von der erkannten Fehlerart (d.h. vom Fehlerzähler) unterschiedliche Maßnahmen durchzuführen.

Weiterhin ist es möglich, die Grenzwerte N1, N2 und N3 für alle Fehlerzähler individuell zu wählen. Dadurch ist es beispielsweise möglich, dass bei nicht gravierenden Fehlern die Eingriffsgrenzwerte N1, N2 und N3 höher als bei gravierenden Fehlern gewählt werden. Allerdings ist es auch denkbar, dass N1, N2 und N3 für alle Fehlerzähler dieselben Werte annehmen.

In Fig. 1 wurden als Beispiel erste, zweite und dritte Maßnahmen je nach Stand des Fehlerzählers ergriffen. Es ist denkbar, die Maßnahmen sogar noch feiner abzustufen, d.h. es gibt auch noch vierte Maßnahmen, fünfte Maßnahmen usw.
Es ist aber auch möglich und denkbar, mit lediglich zwei abgestuften Maßnahmen auszukommen.

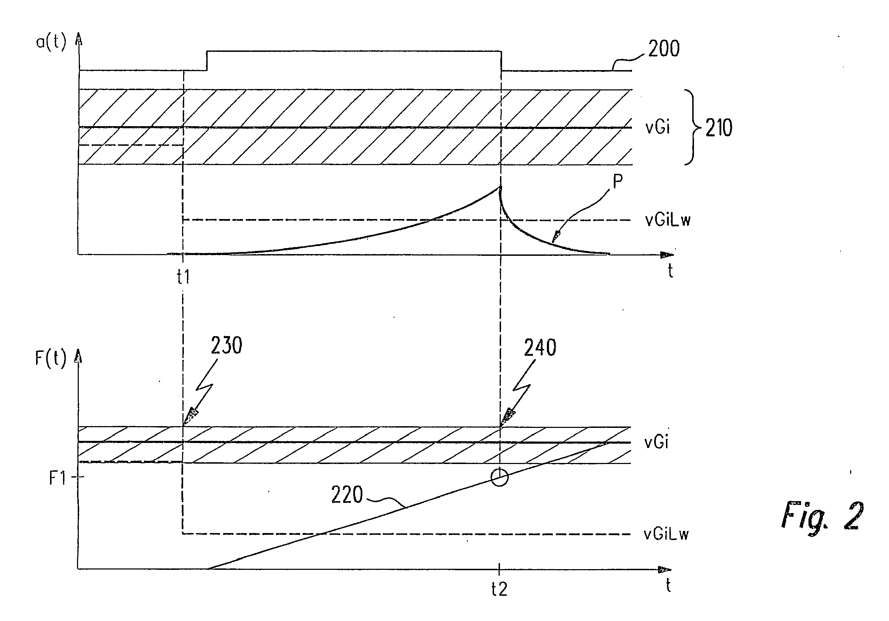

Konkrete Ausführungsformen des in Fig. 1 allgemein diskutierten Sicherheitskonzeptes sind in den Fig. 2 bis 4 dargestellt. Da diese Figuren alle ganz ähnlich aufgebaut sind, soll zunächst einmal der allgemeine Aufbau erläutert werden. Dabei wird ein als Fahrdynamikregelungssystem ausgeprägtes Radschlupfregelungssystem vorausgesetzt.

Jede dieser Figuren besteht aus zwei Diagrammen. Im oberen Diagramm sind jeweils verschiedene Größen a(t) (Ordinate) als Funktion der Zeit t (Abszisse) aufgetragen. Diese sollen nun der Reihe nach besprochen werden.
- Das oberste Signal 200 beschreibt als binären Signalverlauf den Zustand des Pumpenmotors des Radschlupfregelungssystems. Dabei handelt es sich um den Motor der Rückförderpumpe, welche für den aktiven Druckaufbau (d.h. ohne Mithilfe des Fahrers) sorgt. Nimmt dieses Signal seinen tiefen Wert ("low") an, dann ist der Pumpenmotor ausgeschaltet. Nimmt das Signal den hohen Wert ("high") an, dann ist der Pumpenmotor eingeschaltet.
- Als nächstes Signal ist die mit einem Gierratensensor gemessene Gierrate vGi aufgetragen. Diese ist in allen Fällen als zeitlich konstant angenommen, d.h. es liegt eine waagrechte Gerade vor. Die geschweifte Klammer 210 zeigt den schraffierten Bereich an, welcher das erlaubte Reglertoleranzband der Gierrate angibt. Auf diesen Begriff wird später näher eingegangen.
- Als drittes Signal von oben ist die mittels eines mathematischen Modells berechnete Gierrate vGiLw strichliert eingezeichnet. Als mathematisches Modell eignet sich beispielsweise das Einspurmodell, welches auch unter dem Namen Ackermann-Beziehung bekannt ist. Darin wird aus dem Lenkwinkel, der Fahrzeuglängsgeschwindigkeit sowie weiteren Parametern die Gierrate berechnet.
- Als viertes und letztes Signal von oben ist die Größe p als Funktion der Zeit eingezeichnet. p ist ein Maß für den aufgebauten Druck in einem ausgewählten Radbremszylinder.

Im unteren der beiden Diagramme sind wieder die gemessene Gierrate vGi, die berechnete Gierrate vGiLw, sowie in schraffierter Form das Reglertoleranzband der Gierrate eingezeichnet. Das Reglertoleranzband ist dabei in Ordinatenrichtung etwas schmaler als im oberen Diagramm dargestellt. Dies ist aus Gründen der Übersichtlichkeit erfolgt. Als zusätzliche Kurve 220 wurde der Stand des Fehlerzählers F(t) aufgenommen. Dabei wurde der Stand des Fehlerzählers aus Gründen der Übersichtlichkeit als kontinuierlich ansteigende Gerade dargestellt. Vorzugsweise ist der Stand des Fehlerzählers aber eine diskrete ganze Zahl, d.h. es kann sich auch um eine Treppenfunktion handeln. Diese Unterscheidung ist aber für die folgenden Betrachtungen unwesentlich.

Zuerst soll Fig. 2 diskutiert werden. Dazu wird zunächst im oberen Diagramm die gemessene Gierrate vGi mit der berechneten Gierrate vGiLw verglichen. Über die ganze Zeitachse t hinweg werde dabei die Gültigkeit des mathematischen Modelles zur Berechnung der Gierrate vGiLw vorausgesetzt. Zum Zeitpunkt t1 trete ein Sensorfehler 230 (siehe Blitzsymbol im unteren Diagramm), beispielsweise des Lenkwinkelsensors, auf. Es werde vorausgesetzt, dass der Lenkwinkel in die Berechnung der Gierrate vGiLw eingehe. Deshalb tritt zum Zeitpunkt t1 eine plötzliche Abweichung zwischen vGi und vGiLw auf. Diese Abweichung ist so stark, daß vGiLw sogar aus dem Reglertoleranzband der Gierrate vGi herausfällt. Dies hat zwei Folgen:
1. Das Fahrdynamikregelungssystem erkennt fälschlicherweise auf eine Abweichung zwischen Soll- und Istgierrate. Deshalb wird ein Regelungseingriff gestartet, erkennbar am Einschalten der Pumpe sowie am Anwachsen des Druckes p im oberen Diagramm.
2. Der Wert F(t) des diesem Fehler zugeordneten Fehlerzählers im unteren Diagramm beginnt anzusteigen. Das hängt damit zusammen, dass bei jeder erneuten Überwachung (siehe Fig. 1, Block 102) eine Differenz zwischen den beiden Gierraten (vGi und vGiLw) und damit ein weiterer Fehlerverdacht festgestellt wird. Zum Zeitpunkt t=t2 hat der Wert des Fehlerzählers den Wert F1 erreicht, d.h. der Fehler gilt als hinreichend sicher erkannt. Dies ist mit dem Blitzsymbol 240 gekennzeichnet. Deshalb wird zum Zeitpunkt t2 der Regelungseingriff des Fahrdynamikregelungssystems wieder beendet. Dazu wird die Pumpe 200 abgeschaltet und der Druck p klingt wieder ab.

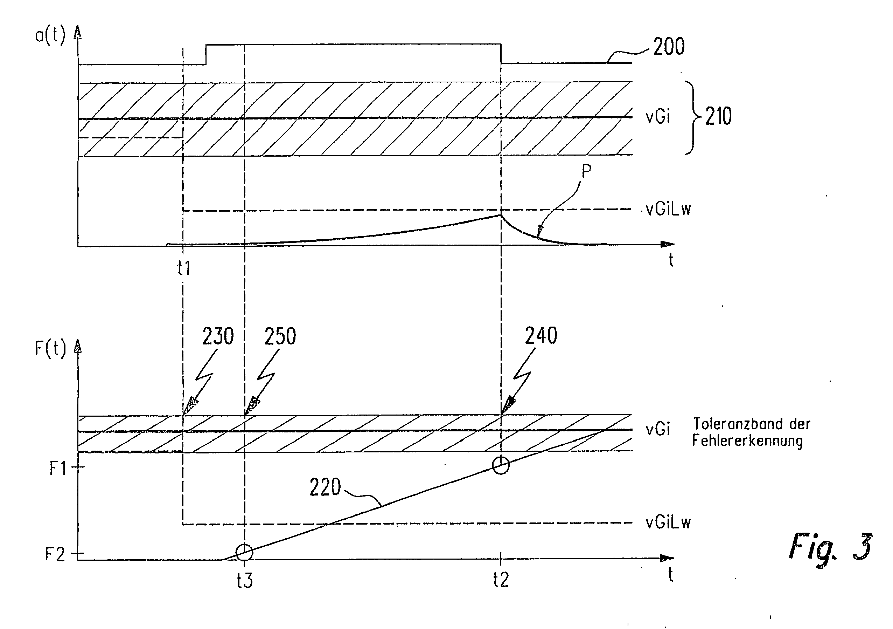

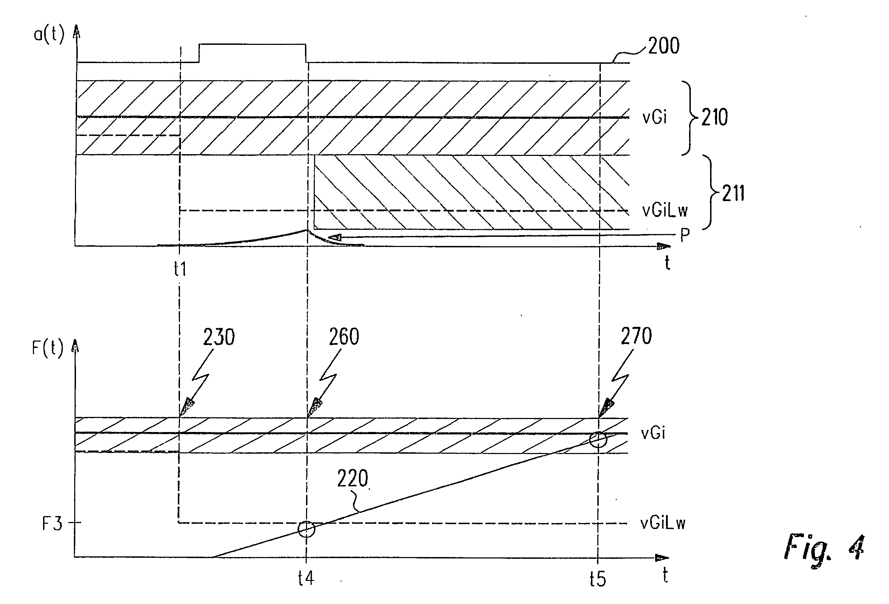

Das Blitzsymbol 230 tritt mit derselben Bedeutung auch in den Figuren 3 und 4 auf.

In Fig. 3 sind zusätzlich der Zeitpunkt t3 (mit t3 < t2) sowie das Blitzsymbol 250 eingezeichnet. Zum Zeitpunkt t3 hat der Fehlerzähler bereits einen ersten Grenzwert F2 erreicht. Deshalb wird zum Zeitpunkt t3 die Dynamikbegrenzung des Druckes aktiviert (erste Maßnahme). Dies ist daran zu erkennen, dass der Druck im oberen Diagramm langsamer als in Fig. 2 ansteigt. D.h. der Regelungseingriff des Fahrdynamikregelungssystems findet langsamer statt. Zum Zeitpunkt t2 hat der Fehlerzähler sogar den zweiten (und höheren) Grenzwert F1 erreicht. Nun wird auf einen sicheren Fehler erkannt und der Druck p wieder abgebaut. Man sieht, dass infolge der vorangegangenen ersten Maßnahme lediglich ein kleiner Druck abgebaut werden muß. Die Auswirkungen des irrtümlichen Bremseneingriffs des Fahrdynamikregelungssystems sind schwächer geblieben als in Fig. 2.

Eine weitere Ausgestaltung der Erfindung ist in Fig. 4 dargestellt. Zum Zeitpunkt t1 beginnt wieder fälschlicherweise der Regelungseingriff des Fahrdynamikregelungssystems. Dies ist im oberen Diagramm durch den einsetzenden Anstieg des Druckes p erkennbar. Zum Zeitpunkt t4 erreicht der Fehlerzähler den Wert F3. Es wird auf Fehlerverdacht erkannt, gekennzeichnet durch das Blitzsymbol 260. Als Folge des Fehlerverdachts findet eine Aufweitung der Eingriffschwelle des Fahrdynamikregelungssystems statt. Dies ist im oberen Diagramm schraffiert eingezeichnet und mit der geschweiften Klammer 211 markiert. Da nun das Reglertoleranzband des Fahrdynamikregelungssystems breiter geworden ist, fällt für t > t4 der berechnete Wert vGiLw wieder in das Reglertoleranzband von vGi. Deshalb wird der Eingriff des Fahrdynamikregelungssystems wieder rückgängig gemacht. Das ist am Druckabbau im oberen Diagramm zu erkennen. Zugleich wird die Pumpe wieder abgeschaltet. Zum Zeitpunkt t5 überschreitet der Wert des Fehlerzählers einen zweiten Grenzwert. Dies ist durch das Blitzsymbol 270 gekennzeichnet. Nun gilt der Fehler als sicher erkannt und zweite Maßnahmen werden ergriffen.

Wie bereits erwähnt sind verschiedenste Fehlerzähler für verschiedenste Überwachungsmaßnahmen denkbar. Ein erkannter Fehler kann vorteilhafterweise nicht nur zur Einschränkung der Funktionen des Radschlupfregelungssystems herangezogen werden, sondern möglicherweise kann auch die Fehlerursache direkt festgestellt und in irgendeiner denkbaren Form protokolliert, gespeichert oder als Fahrerinformation ausgegeben werden. Dies erleichtert eine spätere Diagnose, beispielsweise bei einer Werkstattuntersuchung und führt zu verkürzten Serviceaufenthalten. Dies kann zu einer beträchtlichen Kosteneinsparung führen.

Bei der Erfindung ist es nützlich, zwischen 2 Arten von Fehlern zu unterscheiden:
1. Komponentenfehler sind die Fehler, welche eindeutig einer Komponente zugeordnet werden können.
2. Systemfehler sind Fehler, deren Ursache nicht eindeutig ermittelt werden kann.

Deshalb sollte jedem Fehlerzähler vorteilhafterweise die Information zugeordnet werden, ob es sich um einen Komponenten- oder einen Systemfehler handelt. Diese Information sollte für eine spätere Diagnose zur Verfügung stehen.

Sollte ein zumindest einmal detektierter Fehler bei der nächsten Überwachung (siehe Block 102 in Fig. 1) plötzlich nicht mehr auftreten, dann wird in Fig. 1 in Block 101 der Fehlerzähler wieder auf Null rückgesetzt.

Alternativ dazu gibt es auch die folgende Möglichkeit zur Rücksetzung des Fehlerzählers:
- Die Zählung mit dem Fehlerzähler erfolgt stets innerhalb eines Zündungszyklus.
- Bei Auftreten eines überwachungsspezifischen Fehlerverdachtes wird der Fehlerzähler um einen vorgebbaren Wert, z.B. 1024, inkrementiert. Da dies häufig als Filter realisiert ist, empfiehlt es sich, dafür eine mit dem Filter zusammenhängende Zahl zu verwenden.
- Wird der Fehlerverdacht nicht neu gesetzt, dann wird der Fehlerzähler beispielsweise in einem 5.12-Sekunden-Raster jeweils um ein Bit dekrementiert. Das heißt nach einer Zeit von 1024 * 5.12 Sekunden (das sind ungefähr 1.5 Stunden) wird ein einmalig gesetzter Fehlerverdacht vergessen.

Ein besonders nützlicher Einsatzbereich eröffnet sich für die vorliegende Erfindung bei Fahrzeugen, welche mit einer elektrohydraulischen Bremse ausgerüstet sind. Diese hat wesentlich kürzere Reaktionszeiten als eine konventionelle hydraulische Bremse. Ein Regeleingriff eines Fahrdynamikregelungssystems ist für den Fahrer dann bemerkbar, wenn ein Bremsdruck von ca. 20 bar aufgebaut worden ist. Dafür braucht ein konventionelles hydraulisches Bremssystem ungefähr 200 Millisekunden, ein elektrohydraulisches Bremssystem dagegen nur noch 20 Millisekunden. Deshalb sind hier verkürzte Fehlererkennungszeiten besonders vorteilhaft. Das vorgeschlagene mehrstufige Fehlererkennungsverfahren ermöglicht nahezu unabhängig von der Geschwindigkeit der Stellglieder eine robuste Fehlererkennung.

Abschließend sollen nochmals die wichtigsten Punkte der Erfindung stichwortartig zusammengefasst werden:
- Das Verfahren beruht auf dem Konzept des Ansprechens eines zwei- oder mehrstufigen Fehlerverdachtes zu Beginn der Fehlererkennungszeit
- In der ersten Stufe des Fehlerverdachtes wird die Druckaufbaudynamik begrenzt. Somit werden die Auswirkungen möglicher fehlerhafter Eingriffe (bis die zweite Stufe des Fehlerverdachtes gesetzt wird) reduziert.
- In der zweiten Stufe des Fehlerverdachtes werden die Fahrzeugreglereingriffsschwellen aufgeweitet. Mit dieser Maßnahme werden Fahrzeugreglereingriffe unterdrückt und es wird Zeit für die robuste und sichere Erkennung des Fehlers gewonnen.
- Da mehr Zeit für die Fehlererkennung zur Verfügung steht (längere Fehlererkennungszeit) wird es erleichtert, eine eindeutige Zuordnung von Systemfehlern zu Komponentenfehlern zu treffen.
- Das Zählen des Auftretens eines Fehlerverdachts erlaubt auch die Erfassung von durch Wackelkontakt bedingten Fehlern.

## Patentansprüche

1. Verfahren zur Erzeugung eines Fehlersignals und darauf basierender Durchführung von Maßnahmen bei einem mit einem Radschlupfregelungssystem und/oder Radverzögerungsregelungssystem ausgestatteten Kraftfahrzeug, welches
- wenigstens eine Funktionsgröße, die die Funktionalität des Radschlupfregelungssystems und/oder Radverzögerungsregelungssystems repräsentiert, auf einen Fehler hin überwacht und
- im Falle wenigstens eines detektierten Fehlers den Wert wenigstens eines Fehlerzählers (ik) inkrementiert und
- wenigstens ein Fehlersignal ausgibt, wenn der Wert wenigstens eines Fehlerzählers einen vorgebbaren Grenzwert (N1, N2, N3) überschreitet,
**dadurch gekennzeichnet, dass**
- für wenigstens einen Fehlerzähler gleichzeitig wenigstens zwei verschiedene vorgebbare Grenzwerte (N1, N2, N3) vorhanden sind, bei deren jeweiligem Überschreiten durch den Zählerstand des wenigstens einen Fehlerzählers (ik) unterschiedliche Fehlersignale ausgegeben werden und
- in Reaktion auf die unterschiedlichen Fehlersignale unterschiedliche Maßnahmen im Radschlupfregelungssystem und/oder Radverzögerungsregelungssystem durchgeführt werden.

2. Verfahren nach Anspruch 1, **dadurch gekennzeichnet, dass** es sich bei dem Radschlupfregelungssystem und/oder Radverzögerungsregelungssystem um ein Fahrdynamikregelungsystem handelt, welches wenigstens eine die Fahrdynamik repräsentierende Größe auf ein gewünschtes Verhalten regelt.

3. Verfahren nach Anspruch 1, **dadurch gekennzeichnet ,dass** die Überwachung wenigstens einer Funktionsgröße, welche die Funktionalität des Radschlupfregelungssystems und/oder Radverzögerungsregelungssystems repräsentiert, **dadurch** erfolgt, dass eine Überprüfung des Erfülltseins wenigstens einer gegebenen Bedingung stattfindet.

4. Verfahren nach Anspruch 1, **dadurch gekennzeichnet, dass** als erste Maßnahme bei Überschreiten des niedrigsten Grenzwerts (N1) durch einen Fehlerzähler eine Verlangsamung der Bremskraftaufbauprozesse und/oder Bremskraftabbauprozesse in den Radbremsen durchgeführt wird.

5. Verfahren nach Anspruch 4, **dadurch gekennzeichnet, dass** als zweite Maßnahme bei Überschreiten des zweitniedrigsten Grenzwerts (N2) durch einen Fehlerzähler eine größere Abweichung wenigstens einer die Fahrdynamik repräsentierenden Größe von ihrem gewünschten Verhalten zulässig ist, bevor ein Regelungseingriff des Fahrdynamikregelungssystems erfolgt und/oder dass als zweite Maßnahme wenigstens ein Regelungseingriff des Fahrdynamikregelungssystems ganz untersagt wird.

6. Verfahren nach Anspruch 3, **dadurch gekennzeichnet, dass** die Überwachung wenigstens einer Funktionsgröße derart erfolgt, dass eine durch das Ausgangssignal eines Fahrzeugsensors repräsentierte Größe mit einer durch ein mathematisches Modell berechneten Größe vergleichen wird.

7. Verfahren nach Anspruch 6, **dadurch gekennzeichnet, dass** der Vergleich einer durch das Ausgangssignal eines Fahrzeugsensors repräsentierten Größe mit einer durch ein mathematisches Modell berechneten Größe nur während bestimmter Fahrzustände erfolgt.

8. Verfahren nach Anspruch 1, **dadurch gekennzeichnet, dass** unter einer Funktionsgröße die Spannung an einem Punkt der elektronischen Schaltung des Radschlupfregelungssystems und/oder Radverzögerungsregelungssystems oder das Ausgangssignal eines Sensors oder eine aus einem mathematischen Modell berechnete Größe verstanden wird.

9. Vorrichtung zur Erzeugung eines Fehlersignals und darauf basierender Durchführung von Maßnahmen bei einem mit einem Radschlupfregelungssystem und/oder Radverzögerungsregelungssystem ausgestatteten Kraftfahrzeug, welche
- Überwachungsmittel, welche wenigstens eine Funktionsgröße, die die Funktionalität des Radschlupfregelungssystems und/oder Radverzögerungsregelungssystems repräsentiert, auf einen Fehler hin überwachen und
- Fehlerzählungsmittel, in denen im Falle wenigstens eines detektierten Fehlers der Wert wenigstens eines Fehlerzählers (ik) inkrementiert wird und
- Fehlersignalerzeugungsmittel, durch welche wenigstens ein Fehlersignal ausgegeben wird, wenn der Wert wenigstens eines Fehlerzählers einen vorgebbaren Grenzwert (N1, N2, N3) überschreitet,
enthält, **dadurch gekennzeichnet, dass**
- für wenigstens einen Fehlerzähler gleichzeitig wenigstens zwei verschiedene vorgebbare Grenzwerte (N1, N2, N3) vorhanden sind, bei deren jeweiligem Überschreiten durch den Zählerstand (ik) des wenigstens einen Fehlerzählers unterschiedliche Fehlersignale ausgegeben werden und
- in Reaktion auf die unterschiedlichen Fehlersignale unterschiedliche Maßnahmen im Radschlupfregelungssystem und/oder Radverzögerungsregelungssystem durchgeführt werden.

## Claims

1. Method for producing an error signal and execution, based thereon, of measures in a motor vehicle which is equipped with a traction control system and/or wheel deceleration control system, which method
- monitors for an error in at least one functional variable which represents the functionality of the traction control system and/or wheel deceleration control system, and
- increments the value of at least one error counter (ik) if at least one error is detected, and
- outputs at least one error signal if the value of at least one error counter exceeds a predefinable limiting value (N1, N2, N3),
**characterized in that**
- at least two different predefinable limiting values (N1, N2, N3) are available simultaneously for at least one error counter, and different error signals are output when the counter reading of the at least one error counter (ik) respectively exceeds said limiting values (N1, N2, N3), and
- different measures are carried out in the traction control system and/or wheel deceleration control system in reaction to the different error signals.

2. Method according to Claim 1, **characterized in that** the traction control system and/or wheel deceleration control system is a vehicle movement dynamics control system which adjusts at least one variable, representing the vehicle movement dynamics to a desired behaviour.

3. Method according to Claim 1, **characterized in that** at least one functional variable which represents the functionality of the traction control system and/or wheel deceleration control system is monitored by checking whether at least one given condition is met.

4. Method according to Claim 1, **characterized in that**, as a first measure when the lowest limiting value (N1) is exceeded by an error counter, the braking force-increasing processes and/or braking force-reducing processes in the wheel brakes are slowed down.

5. Method according to Claim 4, **characterized in that**, as a second measure when the second lowest limiting value (N2) is exceeded by an error counter, a larger deviation of at least one variable, which represents the vehicle movement dynamics, from its desired behaviour is permissible before a control intervention of the vehicle movement dynamics control system takes place and/or **in that**, as a second measure, at least one control intervention of the vehicle movement dynamics control system is completely omitted.

6. Method according to Claim 3, **characterized in that** at least one functional variable is monitored **in that** a variable which is represented by the output signal of a vehicle sensor is compared with a variable which is calculated by a mathematical model.

7. Method according to Claim 6, **characterized in that** the comparison of a variable which is represented by the output signal of a vehicle sensor with a variable which is calculated by a mathematical model is carried out only during specific driving states.

8. Method according to Claim 1, **characterized in that** a functional variable is understood to be the voltage at a point on the electronic circuit of the traction control system and/or wheel deceleration control system or the output signal of a sensor or a variable which is calculated from a mathematical model.

9. Device for generating an error signal and execution, based thereon, of measures in a motor vehicle which is equipped with a traction control system and/or wheel deceleration control system, which device contains
- monitoring means which monitor for an error in at least one functional variable which represents the functionality of the traction control system and/or wheel deceleration control system, and
- error-counting means in which the value of at least one error counter (ik) is incremented if at least one error is detected, and
- error signal-generating means which output at least one error signal if the value of at least one error counter exceeds a predefinable limiting value (N1, N2, N3),
**characterized in that**
- at least two different predefinable limiting values (N1, N2, N3) are available simultaneously for at least one error counter, and different error signals are output when the counter reading (ik) of the at least one error counter respectively exceeds said limiting values (N1, N2, N3), and
- different measures are carried out in the traction control system and/or wheel deceleration control system in reaction to the different error signals.

## Revendications

1. Procédé pour former un signal d'erreur et pour exécuter sur base de ce signal des mesures dans un véhicule automobile équipé d'un système de régulation du patinage des roues et/ou d'un système de régulation du ralentissement des roues, et dans lequel :
- les erreurs qui surviennent sur au moins une grandeur fonctionnelle qui représente la fonctionnalité du système de régulation du patinage des roues et/ou du système de régulation du ralentissement des roues sont surveillées et
- au cas où au moins une erreur est détectée, la valeur d'au moins un compteur d'erreur (ik) est incrémentée et
- au moins un signal d'erreur est délivré si la valeur d'au moins un compteur d'erreur dépasse une valeur limite (N1, N2, N3) prédéterminée,
**caractérisé en ce que**
- au moins deux valeurs limites prédéterminées (N1, N2, N3) différentes qui, lorsqu'elles sont dépassées, entraînent l'émission de signaux d'erreur différents suite à l'état de comptage du ou des compteurs d'erreur (ik) sont prévues pour au moins un compteur d'erreur et
- **en ce que** des mesures sont exécutées dans le système de régulation du patinage des roues et/ou dans le système de régulation du ralentissement des roues en réponse aux différents signaux d'erreur.

2. Procédé selon la revendication 1, **caractérisé en ce que** le système de régulation du patinage des roues et/ou le système de régulation du ralentissement des roues sont des systèmes de régulation dynamique du roulage qui régulent à un comportement souhaité au moins une grandeur qui représente la dynamique de roulage.

3. Procédé selon la revendication 1, **caractérisé en ce que** la surveillance d'au moins une grandeur fonctionnelle qui représente la fonctionnalité du système de régulation du patinage des roues et/ou du système de régulation du ralentissement des roues s'effectue en vérifiant qu'au moins une condition donnée est satisfaite.

4. Procédé selon la revendication 1, **caractérisé en ce qu'**un ralentissement des opérations d'établissement de la force de freinage et/ou des opérations de diminution de la force de freinage des freins de roue sont exécutés comme premières mesures au cas où un compteur d'erreur dépasse la valeur limite basse (N1).

5. Procédé selon la revendication 4, **caractérisé en ce qu'**au cas où un compteur d'erreur dépasse la deuxième valeur limite basse (N2), un écart plus grand entre une grandeur qui représente la dynamique de roulage et son comportement souhaité est admis comme deuxième mesure avant une intervention de régulation sur le système de régulation de la dynamique de roulage et/ou au moins une intervention de régulation du système de régulation de la dynamique de roulage est complètement suspendue comme deuxième mesure.

6. Procédé selon la revendication 3, **caractérisé en ce que** la surveillance d'au moins une grandeur fonctionnelle s'effectue en comparant une grandeur représentée par le signal de sortie d'un détecteur du véhicule à une grandeur calculée selon un modèle mathématique.

7. Procédé selon la revendication 6, **caractérisé en ce qu'**une grandeur représentée par le signal de sortie d'un détecteur du véhicule n'est comparée à une grandeur calculée selon un modèle mathématique que pendant certaines situations de roulage.

8. Procédé selon la revendication 1, **caractérisé en ce que** par grandeur fonctionnelle, on entend la tension en un emplacement du circuit électronique du système de régulation du patinage des roues et/ou du système de régulation du ralentissement des roues, le signal de sortie d'un détecteur ou une grandeur calculée selon un modèle mathématique.

9. Dispositif pour former un signal d'erreur et pour exécuter en fonction de ce dernier des mesures sur un véhicule automobile équipé d'un système de régulation du patinage des roues et/ou d'un système de régulation du ralentissement des roues, et dans lequel :
- des moyens de surveillance surveillent l'apparition d'erreurs sur au moins une grandeur fonctionnelle qui représente la fonctionnalité du système de régulation du patinage des roues et/ou du système de régulation du ralentissement des roues,
- la valeur d'au moins un compteur d'erreur (ik) est incrémentée par des moyens de comptage d'erreur au cas où au moins une erreur est détectée et
- des moyens de formation d'un signal d'erreur délivrent au moins un signal d'erreur si la valeur d'au moins un compteur d'erreur dépasse une valeur limite (N1, N2, N3) prédéterminée,
**caractérisé en ce que**
- au moins deux valeurs limites prédéterminées (N1, N2, N3) différentes qui, lorsqu'elles sont dépassées, entraînent l'émission de signaux d'erreur différents suite à l'état de comptage du ou des compteurs d'erreur (ik) sont prévues pour au moins un compteur d'erreur et
- **en ce que** des mesures sont exécutées dans le système de régulation du patinage des roues et/ou dans le système de régulation du ralentissement des roues en réponse aux différents signaux d'erreur.
